# EUROPEAN PATENT APPLICATION

(11) **EP 4 621 681 A2**
(43) Date of publication of application: **24.09.2025**
(21) Application number: 25194839.4
(22) Date of filing: 11.08.2016
(51) Int. Cl.: G06Q 10/08, H04L 9/00, H04L 9/08, H04L 9/32

(54) **SYSTEMS AND METHODS TO ENSURE ASSET AND SUPPLY CHAIN INTEGRITY**

(30) Priority: 11.08.2015 US 201562203653 P
(62) Divisional of application: 16835873.7
(71) Applicant: Stollman, Jeff, Wayne, PA 19087 (US); Mateev, Martin, 9000 Bulgaria (BG)
(72) Inventor: Stollman, Jeff, Wayne, PA 19087 (US); Mateev, Martin, 9000 Bulgaria (BG)
(74) Representative: Papula Oy

(57) **Abstract**

A system for tracking and recording the chain-of-custody for assets within a supply chain that creates a non-repudiatable
electronic log of each custody transfer at each transfer point from initial creation, to final transfer or disposal. In one
embodiment, the system uses encryption technology to register assets that are to be transferred and whose chain of
custody is to be ensured. Through use of encryption key pairs and blockchain encryption technology, an electronic
document is created in an encrypted transaction log updated at each change of custody point. At each such change of
custody point, the new custodians who receive the product are provided with the information generated by the originator.

By way of one example, because the system tracks all inputs and outputs to the system at each change of custody point,
any alteration in product quantities are immediately identified, and a chain-of-custody integrity problem is identified.

## Description

### Claim of Priority

This application claims the benefit of priority under 35 U.S.C. § 119(e) from U.S. Provisional Patent Application Serial No. 62/203,653, filed on August 11, 2015, the benefit of priority of which is claimed hereby, and the contents of which are incorporated by reference herein in its entirety as if set forth in full.

### Field of the Invention

The present invention generally relates to the field of asset and supply chain management and, more specifically, it relates to systems, methods, and processes used for ensuring the chain-of-custody integrity of physical products as such products move along their respective supply chains. Such chain-of-custody integrity systems may be implemented and enhanced using aspects of blockchain encryption technology. By way of one general example, the present invention teaches a system for tracking and recording the chain-of-custody for assets within a supply chain that creates a non-repudiatable electronic log of each custody transfer at each transfer point from initial creation, manufacture, or registration all the way to final transfer, sale, use, or disposal. Through use of encryption key pairs and blockchain encryption technology, an electronic document is created in an encrypted transaction log accessible at each change of custody point.

### Background Description and Review of Certain Prior Art

Supply-chain, chain-of-custody, and asset integrity are age-old problems. But their importance has been growing as manufacturing has globalized, increasing the time, distance, and number of intermediaries between the originators of assets and the consumers of the assets. Furthermore, as production has consolidated, the volume and value of products traversing complex supply chains has increased their appeal as targets for counterfeiters, gray marketers, and terrorists. Given such consolidation and globalization of production and distribution, it has become increasingly difficult to understand or simply know the provenance of many products produced and distributed outside of a single location.

By way of example, one effect of this problem within the electronics and software industries, is that several U.S. defense contractors will not allow products manufactured in certain countries into their data centers because of the potential risk that certain instructions (e.g., software, firmware, or other embedded instructions) may be hidden in the devices that may be part of an advanced persistent threat to exfiltrate confidential or proprietary data from the contractor and/or U.S. defense systems.

In the pharmaceuticals industry, the problem of counterfeit or compromised medications has prompted the enactment of the Drug Supply Chain Security Act ("DSCSA"). The DSCSA requires the serialization of medication packaging as well as the use of transaction documents in order to identify items in transit, using the U.S. National Drug Code, and to identify packaging lot and quantity of the pharmaceutical.

Certain problems and issues faced in maintaining the integrity of a supply chain and the validation of the provenance of any product in the chain include:
1. Even where a product is serialized, a counterfeiter may nonetheless create products with duplicate serial numbers. Once created, the counterfeit products may be difficult to distinguish from the authentic products because both are marked with the same serial numbers. Any delay in determining the validity of the product may result in the counterfeit products entering the market and, in the case of pharmaceuticals, create a significant public health risk.
2. If authentic and legitimate products are surreptitiously diverted from the manufacturer's facility or the supply chain, such diversion may still take many weeks or months before the improper theft and sale of the gray-market products are discovered.
3. Similarly, if authentic and legitimate serialized packaging is surreptitiously diverted from the manufacturer's facility or the packaging supply chain, such diversion may take many weeks or months before the stolen or diverted packaging or products is discovered. Moreover, the contents of these diverted packages may not be legitimate or authentic, which again, in the case of pharmaceuticals, could create a public health risk.
4. Where products are serialized, but not centrally registered, a counterfeiter may be able to create authentic-looking counterfeit packaging with his or her own serial numbers. It may be difficult for a downstream distributor, retailer, or end user to identify such counterfeit packaging or products, and/or verify the product serial numbers. At each supply chain point, each party would be required to separately contact the manufacturer to determine if the number on the product or package is a valid and authentic number. Even with such confirmation of the serial number by the manufacturer, the issue of duplicate serial numbers described under point 1 above still exists.
5. If products or packaging are not serialized, there is very little that can be undertaken to verify authenticity of the products or packaging other than possibly destructive testing. One scenario that has occurred in the pharmaceutical industry is where bad actors obtain or procure legitimate product and then dilute such product in order to increase or multiply the amount of the product to be distributed and sold.

To date, there is no comprehensive solution to these several supply chain integrity problems (including counterfeit products, gray market products, diluted or tainted products, and the creation and use of fabricated and improper transfer documentation) that has achieved market recognition or acceptance.

The present inventive system leverages aspects of encryption technology (such as blockchain technology - which is the technology that underlies Bitcoin and other crypto-currencies) to create and maintain a secure chain-of-custody log to address these problems. More particularly, the log uses encryption to associate specific individuals or entities with the assets in their respective custody in a manner that allows for the custodian identity to be kept private. It further allows for these custodians (which may include manufacturers, miners, creators, or their downstream partners) to register products and to record the transfer of custody transactions at each change of custody point. The innovative system further may use techniques such as proof-of-work and proof-of-stake to append transactions to the log. These techniques create a distributed assurance in the integrity of the transaction log, including recording every time that the asset custody changes, with each such appended transaction being included in the encrypted transaction log. One current example of relevant encryption technology that provides certain of the required capabilities for such a system, is blockchain technology.

While there is substantial prior art on the use and application of blockchain encryption technology, most of the known prior art uses the blockchain technique merely to encrypt and decrypt documents. For example, seminal U.S. Patent No. 4,309,569, for *a Method of Providing Digital Signatures* by Merkle, teaches a method of providing a digital signature for purposes of authenticating a message, using an authentication tree function of a one-way function of a secret number. Nothing in Merkle shows a particular application of the technology disclosed, and shows no application to asset or chain-of-custody integrity.

Similarly, U.S. Patent No. 8,744,076, for a *Method and Apparatus for Encrypting Data to Facilitate Resource Savings and Tamper Detection* by Youn, discloses a method for generally preventing the tampering of encrypted data. The '076 patent more specifically focuses on the particular encryption technology used, and not on the application of such technology.

One application of blockchain technology is, as described above, used for the creation, maintenance and administration of cryptocurrencies such as Bitcoin. However, the use of blockchain technology in Bitcoin, and in other blockchain based cryptocurrencies, is to create virtual currencies that have no physical form and are not controlled or valued by a central authority. By comparison, the currently described system and methodology is specifically used to monitor, record, and ensure the integrity of physical supply chain products.

A different disclosure relating to chain-of-custody security is Patent Cooperation Treaty application PCT/CA2014/050805 (WO 2015024129) for a *Method to Securely Establish, Affirm*, *and Transfer Ownership of Artworks*, by McConaghy, et al. While the '805 application addresses the integrity of the transfer of physical objects, it does not use any blockchain encryption technology, nor does it create any chain-of-custody log. Instead, the '805 methodology merely links ownership of a work of art to an electronic account such as an email address or a Bitcoin address. While the '805 application does reference the Bitcoin master ledger, that Bitcoin ledger pertains only to the transfer of Bitcoins and does not provide any detailed information about the artwork, including product description, quantity, serial numbers, or other important records.

There are other disclosures that provide a description of or use data integrity checking. However, none appear to use blockchain encryption. For example, U.S. Patent Application Serial No. US 10/522,794 for a *System and Method to Provide Supply Chain Integrity,* by Pretorius, et al. creates an integrity index based on deviations from "normal behavior in the chain." There is no reference or suggestion of use of any blockchain software or technology within the '794 application. Similarly, U.S. Patent No. 8,714,442 for a *System for and Method of Securing Articles Along a Supply Chain,* by Sharma, et al. merely authenticates products in a supply chain that have an assigned serial number or some other type of identifier. More specifically, the '442 patent discloses the authentication of products "from the captured identification information at each point" along the supply chain, but does not use or suggest the use of any blockchain software as part of that authentication process.

Further, with respect to supply chain monitoring, U.S. Patent No. 9,015,812, for *Transparent Control of Access Invoking Real-Time Analysis of the Query History,* by Hasso Plattner and Matthieu-Patrick Schapranow, describes a method for granting access to a repository for use in a supply chain, a product tracking system, a medical care environment or a power grid, a repository storing data, the data being sensitive business data pertaining to one or more supply chains, event data pertaining to one or more traceable products, medical data pertaining to one or more patients, or measurement data pertaining to one or more measurements, and wherein an access control server (ACS) is connected to the repository via a link. There is no reference to or suggestion of use of any blockchain technology or encryption technology.

Accordingly, there is a compelling need for new systems, processes and methodologies for ensuring the chain-of-custody integrity of physical products as such products move along their respective supply chains. Such chain-of-custody integrity systems may be implemented and enhanced using aspects of blockchain encryption technology. The present invention recognizes the deficiencies and drawbacks of the current supply chain systems, and the prior attempts to address some of the problems and weaknesses of supply chain integrity. The present innovative system, process and methodology incorporates blockchain software technology to address this challenge and resolve several of the flaws inherent in the current systems and processes.

### Summary of the Invention

The present invention overcomes the disadvantages of the prior art and fulfills the needs described above by providing systems and methods for ensuring the integrity of an asset supply chain through creation and use of an electronic chain-of-custody data file where such data file uses encryption technology to record and maintain relevant transaction information.

A preferred embodiment of the invention is a system for ensuring integrity of an asset supply chain, with the system creating and using an electronic chain-of-custody data file, and the data file being built upon encryption technology to record and maintain asset chain-of-custody transaction information. Another preferred embodiment of the invention is a system for ensuring integrity of an asset supply chain, with the system creating and using an electronic chain-of-custody data file, and the data file built upon encryption technology to record and maintain asset chain-of-custody transaction information, wherein the encryption technology is blockchain technology. A further preferred embodiment of the invention is a system for ensuring integrity of an asset supply chain, with the system creating and using an electronic chain-of-custody data file, and the data file being built upon encryption technology to record and maintain asset chain-of-custody information, wherein the system creates a non-repudiatable log of each custody transfer from asset generation, manufacture, or registration to and through asset final transfer, sale, use or disposal.

Another embodiment of the invention is a computerized system for ensuring integrity of an asset supply chain, said system creating and using an electronic chain-of-custody data file using encryption technology to record and maintain asset chain-of-custody information, said system comprising (a) at least one computer server; (b) a plurality of terminals, each of said plurality of terminals being associated with at least one of a plurality of agents along said supply chain; (c) a software application operating on said at least one computer server; wherein said at least one computer server operates a methodology comprising the steps of (i) registering each of said plurality of agents within said software application; (ii) providing a unique encrypted identifier to each said registered plurality of agents; (iii) registering an asset by an initial agent, said registration including descriptive metrics of said asset; (iv) encrypting an identity of said asset and said initial agent into a non-repudiatable log; (v) registering acceptance of said asset by a new agent, at each change of custody of said asset, said subsequent registration including descriptive metrics of said asset; and (vi) adding a record of such registration acceptance to said non-repudiatable log.

Still another embodiment of the disclosed invention is a methodology for ensuring integrity of an asset supply chain, said methodology creating and using an electronic chain-of-custody data file using encryption technology to record and maintain asset chain-of-custody information, said methodology comprising the steps of (a) registering each of said plurality of custodians within said software application; (b) providing a public/private key pair to each said registered plurality of custodians; (c) registering an asset by an initial custodian, said registration including descriptive metrics of said asset; (d) at each change of custody of said asset, said new custodian registering acceptance of said asset, said subsequent registration including descriptive metrics of said asset; (e) at each change of custody of said asset, generating at least one report transmitted to the prior and new custodian to confirm a change in custody of said asset; and (f) generating further reports transmitted to at least one member of said supply chain, said reports including relevant administrative information.

### Brief Description of the Drawings

For the purposes of illustrating the invention, the attached drawings show certain aspects and embodiments that are presently preferred. However, it should be understood that the invention is not limited to the precise methodology or process steps or system elements as shown in the accompanying drawings, but rather is further disclosed and claimed according to the attached claims.
Fig. 1: is a system overview illustration showing the system key elements in an exemplary chain-of-custody structure and process flow.
Fig. 2: is a flowchart illustration of an exemplary embodiment of certain core steps of the inventive methodology showing an overview of the process flow.
Fig. 3: is a flowchart illustration of an exemplary embodiment detailing the Register Entity step identified in the Fig. 2 overview of the process flow, and showing exemplary steps to be accomplished by each entity seeking to become a member of the supply chain.
Fig. 4: is a flowchart illustration of an exemplary embodiment detailing the Register Product step identified in the Fig. 2 overview of the process flow, and showing exemplary steps for an entity to initiate a blockchain log and create a separate custody log for each product to be tracked.
Fig. 5: is a flowchart illustration of an exemplary embodiment detailing the Transfer Custody step identified in the Fig. 2 overview of the process flow, and showing exemplary steps for transfer of a product between successive custodians.
Fig. 6: is a flowchart illustration of an exemplary embodiment detailing the Generate Reports step identified in the Fig. 2 overview of the process flow, and showing exemplary steps for generation of reports by the system to confirm chain-of-custody integrity or alerting of integrity failures.
Fig. 7: is a flowchart illustration of an exemplary embodiment detailing the Custom Reports step identified in the Fig. 2 overview of the process flow, and showing several types of non-standard reports that may be generated by the system.

### Detailed Description of Certain Preferred Embodiments

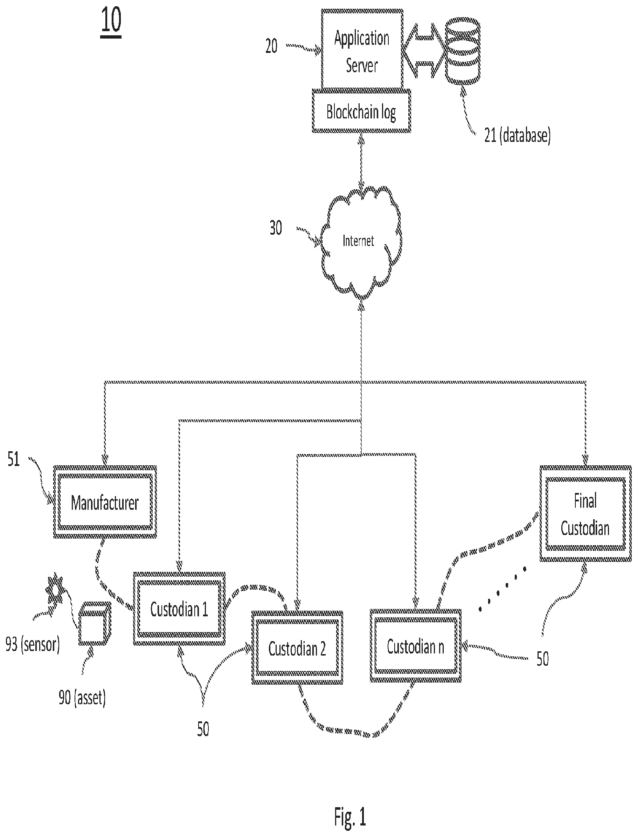

Innovative systems, processes, and methodologies for tracking the chain of custody of assets such as physical products, documents, or legal evidence as they move through a supply or custody chain are disclosed and described through the following several preferred embodiments and exemplary uses and applications. The disclosed system 10 and methodologies have ready application to tracking the chain of custody of raw materials, system or device components, finished goods, and / or most any asset within a supply or custody chain. Fig. 1 illustrates an overview of the various elements and components relevant to tracking products or assets 90 through multiple points or custodians 50 along a chain of custody.

Certain terms are used interchangeably herein to describe certain preferred embodiments of the inventive system, processes, and methodologies. The use of those terms as referencing particular embodiments or figures should not be construed as limiting the scope of the inventive methodologies or systems. By way of example, the term "entity" may include a distributor, manufacturer, shipper, transfer agent, agent, re-packager, dispenser, retailer, and / or a custodian. Similarly, the term "asset" is intended to cover any product, material, device component, fingerprint, hair, chemical, package, and / or physical or electronic document or file. Further, the term "blockchain" is used herein to refer to any technology that allows for the creation of a non-repudiatable transaction log that is resistant to unauthorized alteration and is resilient to failures of any one or more elements in the blockchain system.

A core or primary element of the disclosed systems is the use of encryption technology, including in particular software encryption technology. Such technology serves to create a non-repudiatable, and verifiable, electronic log of the chain of custody of the asset. The electronic log is confirmed / affirmed through use of secure identifiers for each of the users of the system (e.g., each of the various custody holders whenever the custody holders create, transfer, or receive an asset).

A preferred embodiment of this encryption technology is blockchain encryption technology. By way of overview background, a blockchain is an electronic public ledger of transactions. The blockchain or ledger "grows" as "completed" blocks, which correspond to new transactions (e.g., changes of custody), are added to the blockchain. The blocks are added to the blockchain in a linear, chronological order, and only registered agents may add transactions to the blockchain.

In further detail, upon registration, each agent receives a public/private key pair and a computer client application. Although the agent is provided a computer client application, it is important to note that the "client" application need not be resident or operating on the agent's computer. For example, the agent may be provided access credentials to an application that may be accessed over the internet or some other communication network. Each key is uniquely associated to and specifically identifies each agent. While an agent may have more than one key pair, each key pair only references a single agent.

All agents connect to the blockchain network through the client application (e.g., a software application). The client application validates the agent connections and relays transactions (e.g., changes of custody) from each agent to the blockchain. The blockchain has complete information about each of the agents' addresses as well as the registered asset balances of all agents from the first genesis block to the most current completed block. Depending on the rules or policies of the blockchain, the encrypted information may or may not be accessed and read by one or more of the agents. When all parties authorized to handle the assets in the supply chain are registered and all assets are registered, the blockchain provides a complete transaction history of each asset and is able to provide an account of every asset registered in the system.

Because of the technology underlying the blockchain, it can create a non-repudiatable, trusted record, even if certain individual parties may not be fully trustworthy. For example, with respect to the transaction log, in some embodiments, copies of the encrypted transaction log are distributed among multiple nodes in the blockchain network, the integrity of the transaction log cannot be compromised by attacking any single copy of the log. If one copy of the log is improperly altered, it will not match the other copies of the log held by other network nodes. This makes the blockchain highly resistant to hacking or improper alteration - especially as the number of transaction logs, or nodes, increases.

An additional element of the system, applicable to some embodiments, is the tracking of the input and output quantities of the asset in order to identify if any custodian in the chain of custody has transferred more of the asset than it has received. Such variation in the amount or quantity of asset may be an indication that counterfeit, gray market, or diluted product alterations has occurred at this custodian site. Another element of the system, applicable to some other embodiments, is the serialization of the asset such that each unit or collection of units of the asset is tagged with a unique serial number. Such serialization allows for the tracking of individual products or packages through the chain of custody.

As described herein, the electronic chain-of-custody log provides a means for, and is used to record each change in the chain of custody of an asset, including recordation of the quantity and identity (e.g., serial number(s)) of each product or asset that is transferred.

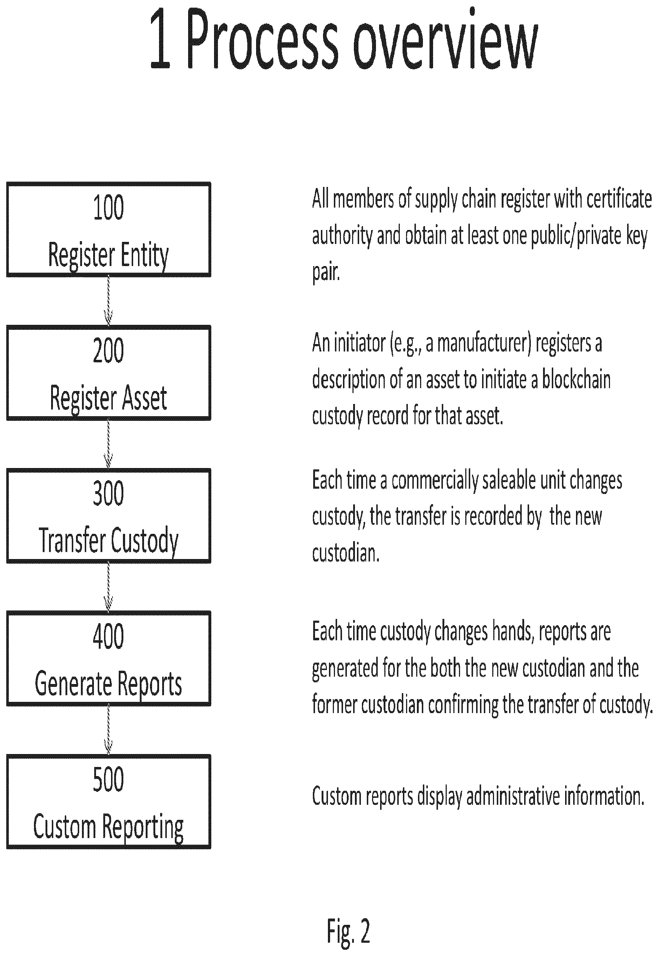

More specifically, as illustrated in one embodiment in Fig. 2, the basic process flow is shown for the innovative chain-of-custody tracking system. To initiate the chain-of-custody tracking, all potential members 50 of the supply chain need to register 100 with a certificate authority and in return for such registration, the supply chain member obtains at least one public/private key pair. In most, but not all, supply chain systems, the end user need not register with the certificate authority because the end user is not transferring the product, but is simply using it. An exception to this rule could be where the end user is tasked with destroying the product, such as for document or product destruction, and accordingly proof is required of the destruction task.

As part of the initial registrant's (e.g., a product manufacturer 51) registration, and to initiate a blockchain custody log, a description of the product or asset must be provided or registered 200. This initial custody record includes the initial quantity of the asset, and any applicable identifying information (e.g., serial numbers of the assets or their packaging for each commercially saleable unit if applicable).

While multiple parties 50 may register assets and initiate a blockchain log, it is important to note that the initiation or registration of a product or asset creates the beginning point of the chain-of-custody log. More specifically, subsequent transfers of custody track the assets (individually if the assets are serialized) only from the point at which the asset is first registered. In other words, the blockchain chain-of-custody log only provides information downstream of the initial registration. Upstream chain of custody, if any, is not recorded within the blockchain log. While a downstream custodian, for example a distributor may create or initiate a blockchain for assets it receives, that distributor blockchain will only provide chain-of-custody information for those parties downstream of the distributor (e.g., warehouses, retailers, shippers).

As shown in Fig. 2, each time an asset or product is transferred or changes custody, the transfer is recorded 300 by the new custodian. The new custodian confirms receipt by logging in with its assigned private key and acknowledging receipt of the asset, including any serial numbers associated with the asset. Such a transfer may be between disparate custodians, or may include transfers to and within singular shipping or logistics companies.

Each time the product custody changes hands, or is transferred to a new custodian, one or more reports are generated 400 for both the new custodian and the former custodian. Such reports provide a record and confirmation of the transfer of custody. **In** addition to standard reports providing basic product information, custom reports 500 may be created to provide particular administrative information. Such custom reports may include information detailing the entire registered supply chain from end-to-end, as well as any alerts (e.g., policy violations) that may have occurred along the supply chain. By way of example, policy violations may include the transfer by an entity of more units of an asset than it had received, or of any mismatched or inconsistent serial numbers for any products in one or more custodians' possession. Again, where there is an inconsistent quantity of products or inconsistent serial numbers, such information could indicate the possibility of counterfeit, grey market goods, or diluted products. Reports can also display the dispersion of an asset, provide shipping manifests, evidence changes of custody, and create a "heat map" that displays the frequency of any policy violations or attempts to "game" the system.

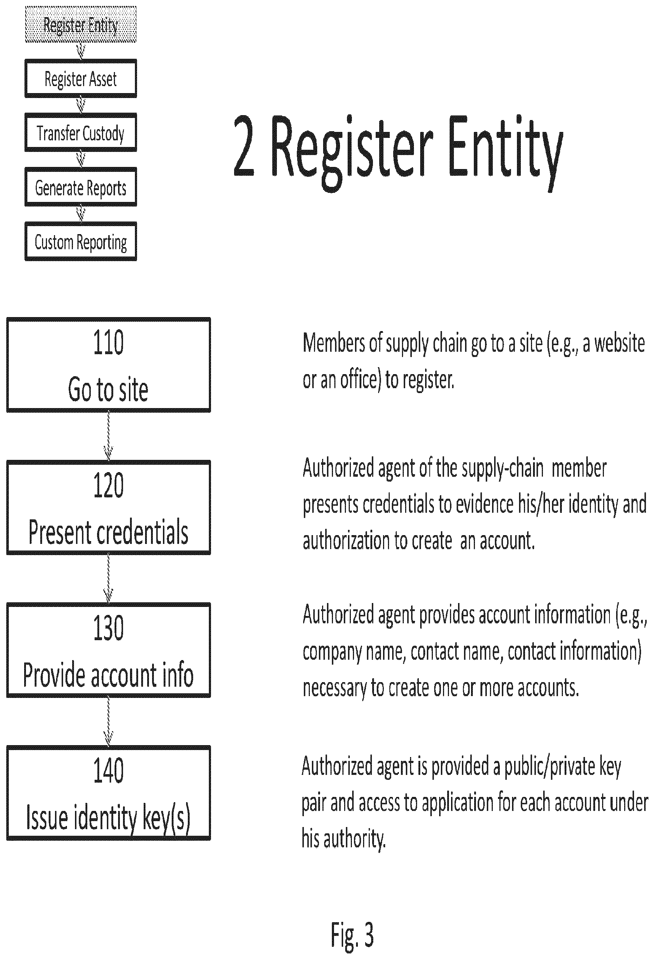

The following sections focus in further detail on each of the Fig. 2 steps. More particularly, Fig. 3 shows an exemplary methodology and the system steps for the registration process flow 100, shown in Fig. 2. All potential members of supply chain access 110 a site (e.g., a blockchain service provider website, or a supply chain website or office) to register their respective membership. As noted above, typically, individual end users are not included in the supply chain and are not required to register. But for certain supply chains (e.g., industrial users of hazardous products), the final user (both the consumer of the asset and the disposer) may be required to register.

As part of the registration process, each supply chain can develop its own policies for (a) who can and cannot be a member, (b) who is authorized to be an agent, (c) delegation of agent authority, (d) how agents will be authenticated, (e) what information is maintained regarding each entity, (f) how assets will be identified, (g) what asset description data will be tracked, (h) which tracking units (e.g., bottles, cartons, kilograms, liters, cubic feet) will be recorded, and (i) who has access to the various information maintained by the supply chain administration and in the chain-of-custody log. For example, in some supply chains, distributors may not want to disclose who their customers are to the upstream manufacturers that supply the distributors. In other examples, it may be important that manufacturers are able to track all of their assets or products throughout the supply chain in order to allow for timely recalls, products alerts, hardware maintenance upgrades and updates, and / or software or firmware updates.

An authorized agent of each supply-chain member provides 120 the required credentials (e.g., physical badge or driver's license or electronic identifying information) to evidence his/her identity and authorization to create an account within the supply chain. The authorized agent also provides 130 necessary account information (e.g., company name, contact name, contact information) to create one or more accounts. The supply chain policies (often managed through an administrative policy site) specify the information required for each supply chain based on both relevant legal requirements and use requirements as determined by an applicable authority, such as a manufacturer, retailer, trade association, regulatory entity, or governmental authority.

The authorized agent is next provided 140 with a public/private key pair for each account under his authority or for which he is registered and is provided either a client application or access credentials for an application which may reside remotely (e.g., in the cloud). Using either the client application or the remote access credentials, the agent is then able to interact with the chain-of-custody blockchain. Each account identity key pair is unique and is within the control and the responsibility of a single agent. In this fashion, a particular supply-chain entity may establish multiple accounts using different agents. For example, each product manufacturing factory may have a single account, and each warehouse may similarly have its own single account. However, shippers may establish many separate accounts for each of their plurality of various depots. Moreover, supply-chain entities may use multiple agents to manage the scope or control of each agent. For example, agents may be different for different countries which could facilitate working with local authorities to resolve counterfeiting or gray-market sales.

In further detail, the registration 100 of supply chain members and the issuance 140 of public/private key pairs could, in one embodiment, be made by a blockchain service such as Bitcoin, Ethereum, Hyperledger, or other similar accepted entity. For the registration process, the registrants may be sent to the third-party certificate authority service directly or the service may provide an intermediate application that collects information specific to the supply chain and then registers the authorized agent with the blockchain service. Similarly, once authorized, the public/private key pair may be sent to the registrant through the intermediate application or forwarded directly to the registrant from the blockchain service.

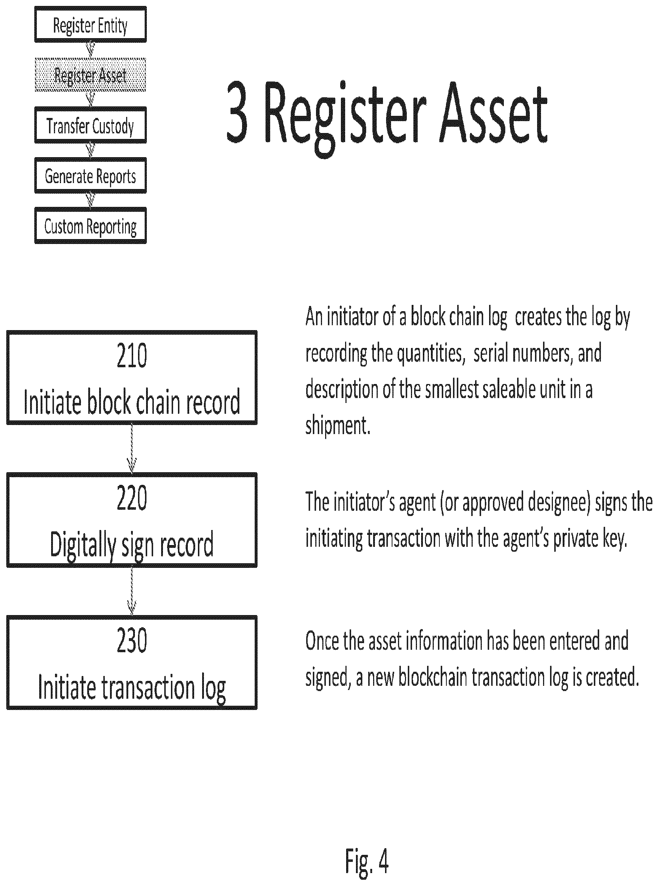

Fig. 4 shows in further detail an exemplary system process flow for the registration of assets to be tracked by the system, as initially shown in Fig. 2, step 200. More particularly, an agent of the initiating entity of a blockchain log creates the initial log 210 by recording a part of the blockchain log in the client application. As noted the client application may be web-based or accessed through similar avenues. The initial log typically would include the asset or product, the serial number, and a description of the smallest unit to be tracked in the system. This may be a single item or a group of items, such as in a bottle of pills or a carton of cigarettes.

Manufacturers of products or assets will typically be the initiators of blockchain records. For products that are assembled from multiple manufactured components, separate records may be maintained for each component. In this way, a single asset may be part of multiple chain-of-custody logs as a part in a variety of manufactured goods. Each time custody of an asset is transferred, each of these logs will be updated. The update process may be automated as a function of policies implemented by the particular supply chain. While entities other than manufacturers are able to initiate a blockchain log, such logs are only capable of tracking the downstream custody of goods registered by each initiating entity. In other words, assets created upstream that do not flow through the initiator cannot be tracked fully.

As shown in Fig. 4, the initiator's agent signs the initiating transaction 220 with the agent's assigned private key. To prevent unauthorized entries, records may not be initiated within the blockchain until such records are signed by a valid "initiator." Signing means that they are linked to the encryption key associated with the initiator's agent. By way of one example, the initiator may be any type of manufacturer, including a miner or a petroleum producer, or any downstream manufacturer, such as a distributor or retailer. Because only downstream records may be appended and tracked on the log, in order to track upstream transfers, it is necessary for an upstream partner to initiate a new record in which the upstream partner becomes the starting point for the chain-of-custody record log.

Once the blockchain has been initiated and the initial signature of the initial custodian agent has been recorded, the transaction log for the blockchain log is created 230. To maintain integrity of the system, all subsequent transfers of custody must be recorded. This may include transfers within an entity's organization (e.g., transfer from manufacturer's factory to the warehouse or transfer by a shipper from one transshipment point to another). For practical reasons, a supply chain owner (e.g., a trade association) may establish policies that define any exceptions for internal transfers that could be based upon an assessment of the risk to the integrity of the supply chain. Such policies may specify the assignment of liability between agents, or otherwise, associated with such transfers. In different embodiments, such policies or rules may be recognized as necessary standards or regulations to be implemented by various supply chains in order for the supply chain to be compliant with the policies of standards organizations. Such organizations may be, by way of example, the International Standards Organization ("ISO") or other similar standards setting associations, or regulatory authorities such as the Federal Drug Administration.

It should be noted that some supply chains may be initiated at a time when existing inventory is already downstream of the initiator. For example, if a pharmaceutical manufacturer originates a chain of custody for a product that has been in the market for several years, there is likely to be significant downstream inventory already in the system at the time of origination. In such cases, the supply chain policies will generally govern the procedures to be undertaken to account for this prior downstream inventory. Alternative methods for handling this downstream inventory may include procedures such as the following:
- creating origination transaction records for past shipments and then re-creating the chain of custody among all of the members of the supply chain from historical documents (e.g., invoices, packing lists, DSCS transaction documents, etc.). Such transactions may be given an additional label to indicate their lower level of reliability;
- requiring all current asset holders to originate new blockchain records to their current inventory on hand; and / or
- requiring supply chain members to use a First-In/First-Out processing of their inventory to hasten the reduction of assets not covered in the newly originated blockchain.

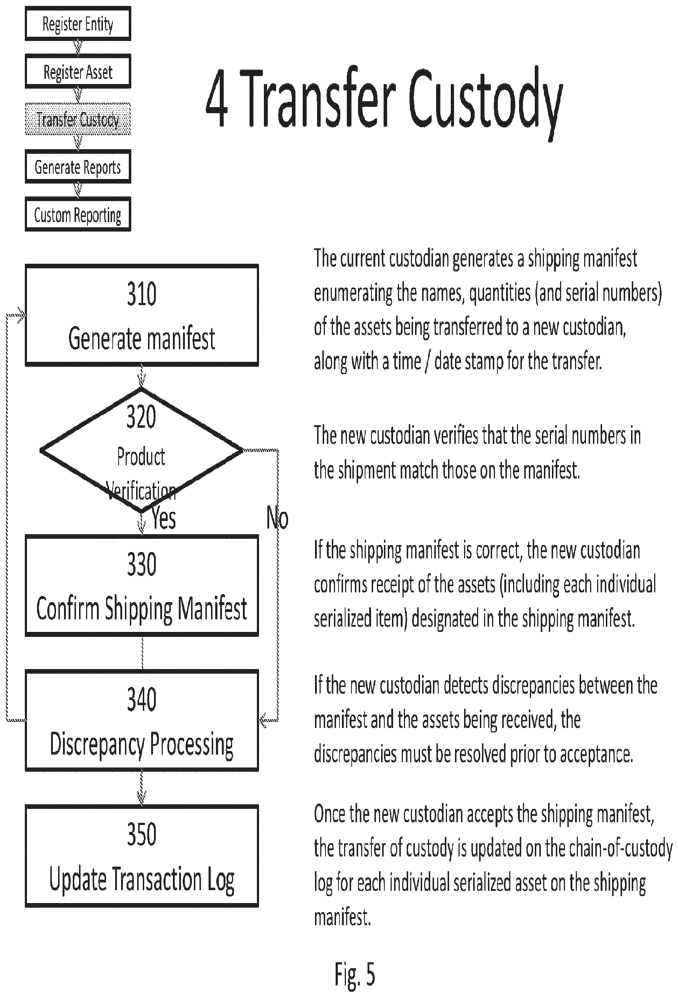

Fig. 5 shows an exemplary system process flow for the transfer of custody of an asset tracked in the system, as first disclosed in Fig. 2, step 300. The current custodian generates a shipping manifest 310 using the client application or other similar application interface, which enumerates certain details about the product or assets, including the serial numbers of the assets being transferred to a new custodian where applicable. Shipping manifests can only be created for transferring assets to other members of the supply chain. For protection of the chain of custody, any prospective new custodian who is not registered cannot obtain a shipping manifest. The prospective new custodian must first register before a shipping manifest will be generated and provided to the new custodian.

The current custodian is responsible for obtaining the public key of the prospective custodian and using it to identify the new custodian in order to generate the shipping manifest. If the current custodian is a shipper (or equivalent "pass-through" custodian), he does not generate a new shipping manifest. Instead, the shipper uses the same shipping manifest accompanying the shipment from the previous custody holder. Multiple shipping manifests may be generated if different items are being transferred to different recipients. For example, a manufacturer may have produced 100 widgets. If it ships 30 widgets to Distributor A's warehouse, 20 widgets to Distributor B's Eastern warehouse, and 20 widgets to Distributor B's Western warehouse, then three separate manifests are generated. The manufacturer still retains 30 widgets in this example for subsequent sale, and no manifest is yet required for these because custody has not been transferred from the manufacturer.

As shown, the system automatically tracks the inputs and outputs to any custodian entity as identified by its private key. Through such tracking, the system will detect evidence of attempts at counterfeiting, gray-marketing, or product dilution. For example, similar to the above scenario, if entity A obtains 30 units (or widgets) of Product X from the manufacturer, he cannot transfer more than 30 units of Product X to any custodians downstream. He can sell 10 units to entity B, sell another 15 units to entity C, and retain the remaining 5 units for future sale/transfer. If entity A then seeks to transfer 10 units to entity D (5 more units than he has remaining), the system will trigger an alert because entity A does not have legitimate title to more than 5 units. It does not matter if entity A "obtained" the additional 5 units from a counterfeiter, a gray-marketeer, or by diluting any units in its stock. The system is capable of identifying the anomaly and accordingly registers an alert upon identification of the anomaly. Such automatic identification of inconsistent transfers reduces the incentive to participate in these type of illegal and illegitimate markets.

To expedite generation of the transfer manifest, the current custodian may use automated techniques to capture the serial numbers of each item in the shipment. For example, he may use bar code readers, RFID or NFC scanners, or some other technology, so long as the items being transferred have appropriate labeling or packaging to support use of such techniques. The new custodian verifies 320 that the serial numbers in the shipment match those on the manifest. The new custodian may undertake such verification manually (e.g., inspecting each product or asset, such as a bottle of pills) or it may use any number of automated data capture techniques.

In the interest of expediency, but with some associated risk, the new custodian may elect to accept the shipment without detailed inspection. For example, if 100 bottles of pills are already packed in a single carton, he may merely accept the manifest on its face without inspecting individual bottles because of trust in the entity from whom he is receiving the shipment. In such cases that new custodian accepts the risk and liability for any discrepancies between the manifest and the shipment according to the policies of the supply chain. If the shipping manifest is correct, then the new custodian confirms 330 receipt of each individual serialized item designated in the shipping manifest. The new custodian confirms 330 receipt by digitally signing a receipt form generated by the system. The form should include a listing of the assets included in the shipping manifest. In different embodiments, the receipt form may be signed once for all items transferred or signed separately for each item as determined by the policies of the supply chain.

If the new custodian detects 340 discrepancies between the manifest and the assets being received, the discrepancies must be resolved prior to acceptance of the shipping manifest. If resolution of the discrepancy requires a change to the information in the shipping manifest, the current custodian must issue 310 a new shipping manifest with the corrected and verified information. If the current custodian is a shipper, resolution requires that a new shipping manifest must be generated by the party generating the original shipping manifest. This new manifest will, again, require the digital signature of the current custodian. Upon receipt of the revised manifest, the new custodian again verifies 320 accuracy of the product being accepted and, if it is accurate, approves or confirms 330 the product shipment.

Once the new custodian accepts the shipping manifest, the transfer of custody is updated and time / date stamped 350 on the chain-of-custody log for each asset or individual serialized asset identified on the shipping manifest. In the case of a shipper who accepts temporary custody while transferring assets from Custodian A to Custodian B, the same manifest generated by Custodian A will be presented to Custodian B.

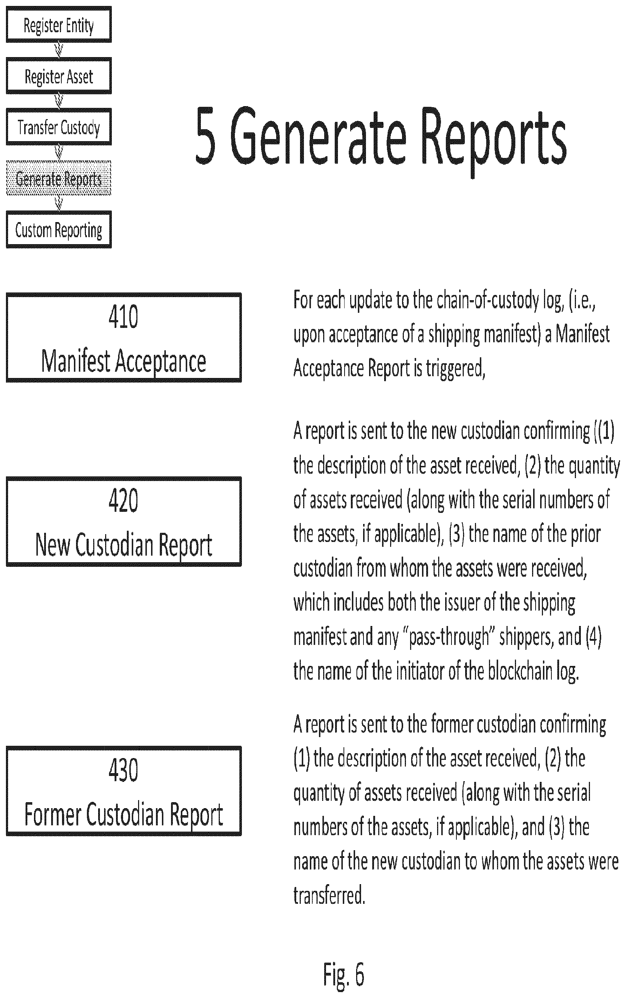

Fig. 6 illustrates an exemplary set of standard reports that may be generated by the system. For each update to the chain-of-custody log, or upon acceptance of a shipping manifest by a new custodian, a Manifest Acceptance ("MA") report 410 is created. This MA report is distributed to the prior product custodian. In the event that the prior custodian is a shipper, an additional copy of the report is also distributed to the party generating the shipping manifest, and the name of the shipper is included in the MA report.

Upon acceptance of an asset, a New Custodian ("NC") report is generated and sent 420 to the new custodian. The NC report confirms (1) the description of the asset received, (2) the quantity of assets received (along with the serial numbers of the assets received, if applicable), (3) the name of the prior custodian from whom the assets were received, which includes both the issuer of the shipping manifest and any "pass-through" shippers, (4) the name of the initiator of the blockchain custody log, and (5) the time and date at which transfer of custody was accepted by the new custodian. Finally, a Former Custodian ("FC") report is sent 430 to the prior custodian confirming (1) the description of the asset received, (2) the quantity of assets received (along with the serial numbers of the assets, if applicable), (3) the name of the new custodian to whom the assets were transferred, and (4) the time and date at which transfer of custody was accepted by the new custodian. If the prior custodian was a shipper, copies of the FC report are also sent to the issuer of the shipping manifest, and the name of the shipper is also included in the FC report.

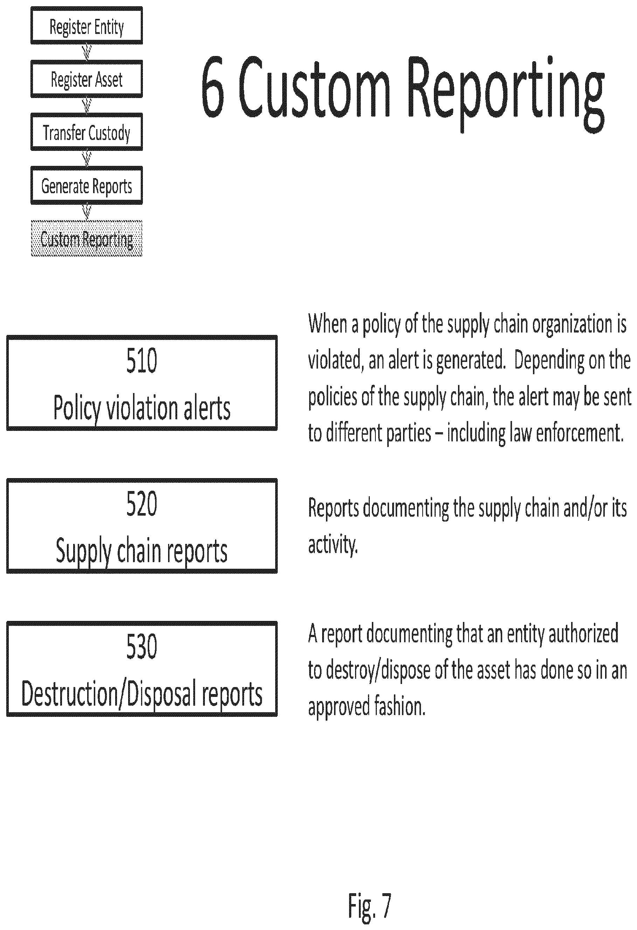

Fig. 7 shows an exemplary set of custom reports that may be generated by the system upon occurrence of certain events. For example, when a policy of the supply chain organization is violated, a Policy Violation alert is generated 510. Depending on the policies of the supply chain, the generated alert may be sent to different parties - including law enforcement. By way of example, Policy Violation alerts may include:
- Quantity Exception -- if an entity in the supply chain transfers more of an asset than it has received, a Quantity Exception alert may be triggered, and should be transmitted to the manufacturer and all entities downstream of the violating entity.
- Serial Number Exception - if an entity in the supply chain transfers a serial number not recorded to be in its possession, a Serial Number Exception alert may be triggered, and should be transmitted to the manufacturer and all entities downstream of the violating entity.
- Violation Heat Map - a Violation Heat Map ("VHM") report provides a display of the supply chain, or portion thereof, that highlights the areas where discrepancies and/or violations for a particular serial number, group of serial numbers, or all serial numbers applicable to a particular asset were detected. The report may be color-coded to readily highlight and display the frequency of discrepancies and/or violations for each party. The VHM report may be in the form of a graphical map or tabular data.
- Spoilage / Degradation / Damage - If spoilage, degradation, or damage of an asset is detected within the supply chain by a sensor 93 or through human inspection (as shown on Fig. 1), the event is recorded and a report is issued indicating (a) the identity of the affected product, (b) the nature of the spoilage, degradation, or damage, (c) the time the event was detected, and (d) the identity of the custody holder at the time of the detection. This report is distributed to the current custodian at the time of the detection, and may also be reported to the manufacturer, all downstream registered entities (e.g., the detection report may be included with any subsequent shipping manifests), and any applicable regulatory agencies, as provided according to the rules of the supply blockchain.

As also shown in Fig. 7, supply chain reports 520 may be generated to document certain details regarding the supply chain and/or any activity within the supply chain. Example of Supply Chain reports may include:
- Membership report - a membership report would generally list all of the members of the supply chain and their contact information.
- Supply chain map - a supply chain map report documents the relationships among the entities in the entire supply chain, or any sub-portion of the supply chain, for a particular product serial number, group of serial numbers, or all serial numbers applicable to a particular asset or product.
- Dispersion report - a dispersion report displays the flow of assets by quantity or by type through the entire supply chain, or any sub-portion of the supply chain for a particular serial number, group of serial numbers, or all serial numbers applicable to a particular asset or product.
- "Where Is?" report - a "where is?" report provides the current custodian of an asset in the supply chain, whether or not it is a uniquely identifiable asset, such as a serialized asset or assets. Such a report may be useful to a manufacturer who seeks to recall a product, or update software or firmware for a certain batch of products. Additionally, such a report may be useful to a retailer in the supply chain seeking to locate readily accessible stock at a distributor or warehouse for a rush order.

Further, as identified in Fig. 7, destruction/disposal reports 530 may be generated to document that an entity is authorized to destroy or dispose of an asset, and that the entity has completed the disposal or destruction in an approved manner. For certain assets (e.g., hazardous materials, or products that include hazardous materials), the supply chain may specifically track each step of the authorized destruction /disposal of the product. In such circumstances, a destruction/disposal report is provided to the end user documenting not only that it has passed custody to an entity authorized to destroy/dispose of the product in an approved fashion, but also that the destruction/disposal entity confirms that it has successfully carried out the destruction/disposal of the product in accordance with approved procedures.

In further embodiments, and implementations of the innovative system, the blockchain technology and system may also be combined with one or more monitors or tracking sensors 93. Such monitors and tracking sensors 93 could be used to record environmental conditions, such as excess heat or cold; asset conditions, such as discoloration or shrinkage; or handling conditions, such as vibration or acceleration (e.g., impact or shock), that could result in certain product spoilage, degradation, or damage such as breakage. Such systems would be able to provide valuable insight into potential product spoilage, degradation, or damage at any location along the supply or distribution chain. Assets or products that may be susceptible to spoilage or degradation include pharmaceuticals, food products, certain chemicals, certain electronic devices, valuable artwork, or any fragile or vulnerable assets. The sensors 93 could be attached to the product packaging, or in certain embodiments attached directly to the product (as illustrated in Fig. 1). Through such monitoring of various conditions, automatic alerts could be generated and recorded to the blockchain log showing when and where such adverse external conditions occurred.

By way of example of a further implementation and embodiment of the disclosed supply chain integrity tracking system, the method and system could be used to provide authorization to access specific assets that are meant to be controlled by a single owner. For example, in the case of connected vehicle, the disclosed system has direct and ready application. In such a scenario, the vehicle's manufacturer may have received a request to update certain of the vehicle's features to a premium feature set. Where the request was initiated and transmitted by John Doe (or business entity ABC), whose identity has been authenticated, by the [vehicle manufacturer], the manufacturer may then look up the vehicle in the blockchain to verify that John Doe is, indeed, the current registered owner of the vehicle before authorizing the feature update. As long as Mr. Doe owns the vehicle, he is authorized to request and receive upgrades of relevant upgradable features from the manufacturer or other third-parties. But upon Mr. Doe selling or transferring the vehicle, he then relinquishes his authorization to receive future upgrades, and passes such rights, along with ownership, to the vehicle new owner.

While preferred embodiments of the inventive system, processes, and methodologies have been described and disclosed, in particular with reference to certain figures and exemplary embodiments of various supply chain blockchain technology systems, such exemplary representations are not to be construed as limiting the scope of application of the inventive methodologies or systems. By way of example, the supply chain methodologies and systems described herein could be readily applied to the tracking of different assets and products. As disclosed above, the system may also be used to track product integrity through the supply chain using various sensors or monitors 93. Such systems would be able to detect and identify asset spoilage, degradation, or damage that occurs while an asset is within possession and control of an entity, and not merely when the asset is transferred between entities.

In still other embodiments, the system, processes, and methodologies could be used to track particular components or sub-components of an assembled product to ensure that all such components meet necessary specifications. The disclosed systems could also be used to track the composition of fuel burned in maritime shipping (e.g., sulfur content) to detect ships burning fuel that violates environmental regulations. Combined with a certification process (either self or third-party certification), the system could be used to track the compliance of suppliers needed to meet fair labor or applicable environmental practices. Including location information as well as or in lieu of custodian information, the disclosed system could be used to track the location of particular items in large stockpiles such as military stockpiles assembled in anticipation of a military action. Additionally, the system could be used to track custody of individual assets such as documents, artwork, antiques, or legal evidence.

In still other embodiments, the system may also be used to track products or information within non-commercial chains of custody, such as banking, legal or security documents, as well as for transfers of legal evidence. More generally, the system can be used to track and record the chain of custody for most any particular assets in many varied industry sectors to ensure the integrity of the assets sold, transferred, or distributed through the relevant supply chain.

It will be recognized by those skilled in the art that other modifications, substitutions, and/or other applications are possible and such modifications, substitutions, and applications are within the true scope and spirit of the present invention. It is likewise understood that the attached claims are intended to cover all such modifications, substitutions, and/or applications.

## Claims

1. A detector of anomalies in a supply chain configured to identify anomalies to ensure integrity of an asset supply chain network, said system being configured to create and use an electronic asset-tracking data record using encryption technology to record, monitor, and maintain asset tracking information, said system comprising:
a. at least one host compute device;
b. a plurality of electronic user interface devices, each of said plurality of electronic user interface devices being associated with at least one of a plurality of agents associated with said asset supply chain;
c. a software application operating on said at least one host compute device, said software application being configured to detecting anomalies in asset supply chain information;
d. a communications network connecting each of said plurality of electronic user interface devices with said at least one host compute devices;
wherein said detector is configured to:
i. register at least one unique agent identifier, by said at least one host computer device, for at least each of said plurality of agents having data input permission to said asset supply chain;
ii. provide said at least one unique agent identifier, by said at least one host compute device, via said communications network, to at least one of said plurality of agents;
iii. register with said at least one host compute device, at least one asset identifier for each asset or group of assets, by at least one of said plurality of agents, where said at least one asset identifier is created or obtained by said at least one of said plurality of agents ;
iv. encrypt said at least one asset identifier and said at least one agent identifier, by said at least one host compute device, into at least one first transaction record;
v. recording said at least one first transaction record, by said at least one host compute device, into a non-repudiatable log;
vi. send a change of status notice, by at least one of said plurality of electronic user interface devices, to said at least one host compute device, for each change in status of said asset or group of assets or each change in status of said agent identifier;
vii. transforming said change of status notice into at least one second transaction record, by said at least one host compute device, for each change in status of said asset or group of assets or each change in status of said agent identifier, and recording said at least one second transaction;
viii. based upon said recording of at least one second transaction, automatically track, by said at least one host compute device, a quantity of each asset and group of assets before and after said recording of said at least one second transaction, where said asset and group of assets being compared are determined by said recording of at least one second transaction;
ix. based upon said tracking of the quantity of each asset or group of assets, with the non-repudiatable log of said asset supply chain, verify, by said at least one host compute device, consistency with said asset quantity before and after said recording of at least one second transaction;
x. if said quantity verification is confirmed, then automatically add said at least one second transaction record of each status change to said non-repudiable log, by said at least one host compute device; and
xi. if said verification is not confirmed, then
a. create a policy violation report for at least one anomalous transaction; and
b. automatically identify, by at least one of said host compute devices, at least one of said plurality of agents associated with said at least one anomalous transaction.

2. The detector according to claim 1, wherein the asset supply chain system is further configured to:
register (330) acceptance of said asset by a new agent, at each change of custody of said asset;
update (350) the non-repudiable log based on the at least one change record; and
add a record of such registration acceptance to the log.

3. The detector according to claim 1, wherein the system further comprising at least one sensor to monitor environmental, asset, and handling conditions that can input into the system reports of spoilage, degradation, or damage of an asset as a result of said environmental, asset, or handling conditions.

4. The detector according to claim 3, wherein the asset supply chain system is further configured to:
record by at least one sensor observations of said asset condition including spoilage, degradation, or damage of said physical or digital product; and
update the non-repudiable log based on the at least one change record and the detected spoilage, degradation, or damage of said asset.

5. The detector according to claim 1, wherein said detector is configured for use with a certification process to track compliance with at least one of regulatory, fair trade, workplace health and safety, or environmental protocols.

6. The detector according to claim 1, wherein said detector is further configured to track asset location.

7. The detector according to claim 1, further comprising means for at least one custodian or agent to record observations and / or evidence of asset condition including spoilage, degradation, damage, or destruction of said asset.
